Europäisches Patentamt

European Patent Office

Office européen des brevets

(11) Publication number: **0 328 820**

**A2**

## (12) EUROPEAN PATENT APPLICATION

(21) Application number: **88311606.3**

(51) Int. Cl.4: **C01B 17/04**

(22) Date of filing: **08.12.88**

| | |
|---|---|
| The title of the invention has been amended (Guidelines for Examination in the EPO, A-III, 7.3).<br><br>(30) Priority: **23.12.87 GB 8729956**<br><br>(43) Date of publication of application: **23.08.89 Bulletin 89/34**<br><br>(84) Designated Contracting States: **AT BE DE FR GB IT NL SE** | (71) Applicant: **The BOC Group plc**<br>**Chertsey Road**<br>**Windlesham Surrey GU20 6HJ(GB)**<br><br>(72) Inventor: **Watson, Richard William**<br>**1 Woodlands Grove**<br>**Ilkley West Yorkshire LS29 9BX(GB)**<br><br>(74) Representative: **Wickham, Michael et al**<br>**c/o Patent and Trademark Department The**<br>**BOC Group plc Chertsey Road**<br>**Windlesham Surrey GU20 6HJ(GB)** |

(54) **Treatment of gas streams comprising hydrogen sulphide.**

(57) An acid gas stream comprising hydrogen sulphide is passed through a train of at least three stages 50, 60 and 70 of a process in which in each stage a portion of the hydrogen sulphide is burned using oxygen to support combustion, resulting sulphur dioxide reacts at a temperature greater than 800°C with residual hydrogen sulphide and the resulting sulphur vapour is condensed out of the gas mixture. Typically, more than 90 mole% of the hydrogen sulphide is thus converted catalytically thus reducing or eliminating the need for downstream catalytic stages.

EP 0 328 820 A2

FIG.3.

Xerox Copy Centre

## TREATMENT OF GAS STREAMS

This invention relates to the treatment of gas streams. In particular, it relates to the treatment of gas streams comprising hydrogen sulphide.

Gas streams comprising hydrogen sulphide are typically produced as waste products or by-products from many industrial processes. For example, acid gas streams comprising carbon dioxide and hydrogen sulphide are typically produced during oil refinery operations in which sulphur is removed from crude oil. It is necessary to treat such hydrogen sulphide containing streams before discharging them to the atmosphere so as to reduce or remove altogether their content of sulphur-containing gases. One well known, widely practised process for treating a gas stream comprising hydrogen sulphide is the Claus process. This process is based on the reaction between hydrogen sulphide and sulphur dioxide to form sulphur vapour and water vapour in accordance with the equation.

$$SO_2 + 2H_2S = 2H_2O + 3S$$

Sulphur exists in the vapour phase in a number of different molecular species such as $S_2$, $S_6$, and $S_8$ according to the temperature.

The first stage of the Claus process is to burn approximately a third of the hydrogen sulphide in the incoming gas stream to form sulphur dioxide and water vapour in accordance with the equation:

$$2H_2S + 3O_2 = SH_2O + 2SO_2$$

This combustion reaction takes place in a suitable furnace and normally air is used as the source of oxygen for the purposes of combustion. The furnace is designed such that reaction between the sulphur dioxide and hydrogen sulphide can start in the combustion zone and then continue downstream of the combustion zone. It is however a feature of the Claus reaction that at the temperature that is created by the combustion of hydrogen sulphide, it is not possible to convert more than about 75% of the remaining hydrogen sulphide to sulphur by reaction with sulphur dioxide, and typically between 50 to 70% of the hydrogen sulphide is so converted. It is however possible to achieve a higher percentage conversion in the presence of a catalyst at a reaction temperature in the order of 200 to 350°C by reacting the remaining hydrogen sulphide and sulphur dioxide. (At such "catalytic" temperatures, the lower the temperature the higher is the percentage conversion that is achieved). Accordingly, after the gases pass out of the so-called thermal region of the furnace they are cooled to a temperature at which the sulphur that is formed in the furnace condenses. The sulphur is thus recovered. The gases are then reheated to a temperature suitable for the performance of a catalysed reaction between hydrogen sulphide and sulphur dioxide, such temperature typically being in the order of 200°C. A catalytic reaction is then carried out and typically about 60% of the remaining hydrogen sulphide is converted to sulphur. Nonetheless, it is still not possible to achieve 100% conversion as in practice conversions of more than 99.5% can be achieved only at a temperature at which the sulphur vapour condenses and thereby substantially reduces the effectiveness of the catalyst. It is therefore typical to perform the catalytic oxidation of hydrogen sulphide with sulphur dioxide in more than one stage with first condensation of sulphur vapour and then re-heating of the hydrogen sulphide bearing gas stream being carried out between each stage.

Various means may be employed to effect reheating of the gases prior to each catalytic stage. For example, a small part of the feed gas mixture can be diverted from upstream of the furnace and burnt in in-line burners completely to sulphur dioxide, there being typically one such burner upstream of each catalytic reactor. The hot, sulphur dioxide-containing gases are then mixed with the main gas stream upstream of each respective catalytic reactor so as to effect reheating. Alternatively, a part of the main gas stream can be taken from, say, a waste heat boiler used to cool the main gas stream leaving the furnace and used in the same manner as the gas from the in-line burners. Another alternative is to employ indirect heat exchange with, for example steam to effect reheating.

Typically, after two or three such stages, sulphur formed in the most downstream stage is condensed out of the gas stream which is then passed to a tail gas clean-up process of a known kind for handling relatively dilute hydrogen sulphide streams (for example the Scot, Beavon or Stretford process) or which is then incinerated.

Many variations on this basic Claus process are possible. Some of these variations are summarised in the paper "Sulfur Costs vary with Process Selection" by H Fischer, Hydrocarbon Processing, March 1979, pp125 to 129.

Recently, there has been a trend towards using oils of relatively high sulphur contents and also a trend towards stricter environmental standards so far as the discharge to the atmosphere of sulphur-containing gases is concerned, thus requiring an increased number of hydrogen sulphide bearing streams to be treated and hence more treatment capacity for hydrogen sulphide containing gases. For example, where possible, it is desirable to increase the rate at which an existing Claus plant is able to produce sulphur. In practice, the ability of such plants to handle an increased throughput of hydrogen sulphide containing gas is limited. It has been realised that in order to supply the necessary oxygen for combustion, approximately 14 volumes of air are required for each six volumes of hydrogen sulphide in the gas mixture. It has been proposed in for example a paper entitled "Oxygen Use in Claus Sulphur Plants" by M R Gray and W Y Svrcek, 1981 Gas Conditioning Conference, Oklahoma, 1981 and in paper entitled "Modifications Jump Sulphur Recovery Plant Capacity", Oil and Gas Journal, August 20th 1984, pp108 to 112, that the capacity of existing Claus processes can be increased by substituting some commercially pure oxygen for air and thereby reducing the proportion of nitrogen in the gas mixture that flows though the process. In practice, however, in many plants, the amount of uprating that can be achieved by this method is limited as there is a tendency for the reduced volume of nitrogen to lead to higher exit temperatures from the furnace that cannot be withstood by the waste heat boiler or heat exchanger associated with the furnace or by the refactory lining of the furnace. Indeed, the more concentrated (in hydrogen sulphide) the gas stream, the less is the possibility for achieving any significant uprating, such possibility often becoming particularly limited for feed gas streams including 80% by volume or more of hydrogen sulphide.

Accordingly, there have recently been a number of proposals in the art to modify the Claus process to enable pure oxygen or oxygen-enriched air to be used to support combustion of a concentrated hydrogen sulphide stream. Most of these proposals involve introducing an extraneous fluid into the combustion region or associated thermal reaction region to moderate the temperature. In EP 165 609A, this fluid is a gas stream recycled from downstream of the sulphur condenser. Other processes disclosing a similar recycle we described in US patent specifications 3 681 024 and 4 552 747.

EP 199 507A discloses using liquid water or steam to moderate the temperature in the combustion region and associated thermal reaction region, whereas EP 195 447A discloses the use of sulphuric acid and EP 220 610A fluid sulphur for this purpose. However, none of these proposals involve any fundamental alteration to the Claus process: they all still employ a single combustion-thermal reaction region to convert about 65 to 70% of the incoming hydrogen sulphide to sulphur while most of the residual hydrogen sulphide is converted to sulphur in a plurality of subsequent catalytic stages.

More radical modifications of the Claus process are disclosed in EP 237 216A and EP 237 217A. In the former publication, a minor portion of a concentrated hydrogen sulphide feedstock is typically completely combusted using pure oxygen in a first combustion zone, the resulting combination products are cooled and then introduced into a main combustion zone-thermal reaction region in which a part of the remainder of the hydrogen sulphide feedstock is burnt to sulphur dioxide and water vapour using pure oxygen and the sulphur dioxide reacts with hydrogen sulphide to form sulphur vapour. However, although this process does significantly change the thermal part of a conventional Claus process, it does not make possible the elimination of subsequent catalytic reaction stages or substantially reduce the amount of catalytic reation required.

US patent specification 3 331 733 also discloses a Claus process apparently employing two combustion-thermal reaction regions to which substantially pure oxygen is supplied to support the combustion. There is also a third reaction region, and a recycle of gas from downstream of the third region to the first combustion-thermal reaction region. The purpose of the recycle is to moderate the temperature in the combustion-thermal reaction regions.

As disclosed in EP 237 217A such recycle is unnecessary: by burning significantly less than one-third of the hydrogen sulphide in the first combustion zone the need to recycle gas to this combustion zone can be avoided.

In EP 212 297A and EP 234 894A there are disclosed methods of recovering sulphur from a hydrogen sulphide - containing gas stream in which water vapour produced by the Claus reactions is condensed concurrently with the sulphur vapour at a temperature above sulphur melting points, followed by a separation of the water and liquid sulphur. Higher conversion in subsequent catalytic conversion stages is obtained, and operating at elevated pressure increases the benefits. When pure oxygen is used to support combustion in the combustion region, recycle gas is used to moderate the temperature: In one example in EP 212 297A only one thermal reaction region and no catalytic reaction region is used to convert the hydrogen sulphide to sulphur. Residual hydrogen sulphide is converted to sulphur dioxide which is collected as product. If downstream of the combustion - thermal reaction region in the conventional Claus process (ie one using air to support combustion), a second thermal reaction region is employed together with a sulphur condenser intermediate the two thermal reaction regions, there will be such a requirement for preheat between the sulphur condenser and the second thermal reaction region that the process would be uneconomic. Accordingly, the conventional Claus process uses just one thermal reaction stage followed by a plurality of catalytic reaction stages. It can be seen from the prior art discussed above that use of pure

3

oxygen or oxygen-enriched air in one or more combustion zones associated with thermal reaction stages does not substantially affect the need for catalytic conversion of the residual hydrogen sulphide if further sulphur product is to be produced. The catalytic reaction typically causes a disproportionately large pressure drop in the plant used to operate the process. Moreover, the catalyst is typically an expensive material. There is therefore a need to reduce the extent to which subsequent catalytic conversion is required.

It is aim of the present invention to provide methods and apparatuses able to meet this need in which at least 80% of the sulphur content of the hydrogen sulphide in the feedstock is converted to sulphur thermally.

According to the present invention there is provided a method of recovering sulphur from a feed gas stream comprising hydrogen sulphide, in which feed gas is passed through a train of at least three stages in each of which a portion of the hydrogen sulphide is burned using oxygen to support combustion, some of the sulphur dioxide reacts at a temperature of greater than 800°C with residual hydrogen sulphide to form sulphur vapour and water vapour, and the sulphur vapour is separated from the resulting gas mixture, wherein at least 80 mole per cent of the sulphur content of the hydrogen sulphide in the feed gas is converted to sulphur vapour at temperatures greater than 800°C but up to 80 mole per cent of the sulphur content of the hydrogen sulphide in the feed gas remains unreacted in the first stage.

The invention also provides apparatus for recovering sulphur from a feed gas stream comprising hydrogen sulphide, comprising a train of at least three furnaces each having a combustion zone in which in use a portion of the incoming hydrogen sulphide is burned in the presence of oxygen to form sulphur dioxide and water vapour, a thermal reaction zone in which some of the sulphur dioxide is able to react with residual hydrogen sulphide at a temperature greater than 800°C to form sulphur vapour and water vapour and means associated therewith for separating the sulphur vapour from the resulting gas mixture, wherein each combustion zone has its own inlet communicating with a source of oxygen, whereby at least 80 mole per cent of the sulphur content of the hydrogen sulphide in the feed gas is able to be converted to sulphur at temperature greater than 800°C with up to 80 mole per cent of the sulphur content of the hydrogen sulphide in the feed gas remaining unreacted in the most upstream furnace.

Preferably there are four or five stages in the train, and hence four or five furnaces. The relative amounts of hydrogen sulphide converted in each train are desirably selected so as to make it unnecessary to recycle the products of a relatively downstream stage to moderate the temperature in as relatively upstream combustion zone or relatively upstream thermal reaction zone (or both). Preferably, more than 85 mole per cent, and most preferably more than 90 mole per cent, of the sulphur content of the incoming hydrogen sulphide is converted to sulphur thermally that is at temperatures greater than 800°C.

By converting at least 85% by volume of the incoming hydrogen sulphide to sulphur thermally, the need for catalytic conversion may be reduced or eliminated. Apart from any catalyst that might be employed in a 'tail gas clean up' plant of conventional kind used to treat the say, final 5 to 10% of hydrogen sulphide after passage of the feed gas through the said train of stages, the method and apparatus according to the convention typically makes no use of catalytic conversion stages. Thus, the drawbacks associated with the use of catalytic conversion stages in conventional Claus processes may be avoided. Moreover, as previously mentioned, there is no need to recycle the products of a relatively downstream stage to moderate the temperature in a relatively upstream thermal reaction or combustion zone so that the size of the furnaces employed to perform the combustion and Claus reactions may be kept down. The use of substantially pure oxygen to support combustion reduces the volume of 'inert' gas such as nitrogen that typically passes through a plant for performing a conventional Claus process and thereby also helps to keep down the size of the furnaces employed in performing the present invention.

In preferred embodiments of the invention, hydrogen sulphide containing gas mixture entering in the third in sequence of the said train of stages and any further downstream stage is pre-heated typically to a temperature in the range of 400 or 500-700°C. Normally, separation of the sulphur vapour from the hydrogen sulphide containing gas mixture in each stage of the method according to the invention is carried out by cooling the gas mixture leaving the furnace in that stage and then passing the cooled gas into a condenser in which further cooling is performed so as to condense sulphur vapour. Preferably, the pre-heating of the hydrogen sulphide containing gas mixture upstream of a chosen stage of the method according to the invention is effected in a heat exchanger intermediate the furnace and condenser in another chosen stage of the method according to the invention. Accordingly, the gas being pre-heated effects some of the cooling of gas passing from the furnace to the condenser in that stage. The rest of the cooling is preferably carried out in a waste heat boiler immediately downstream of the respective furnace. In one typical example of a method according to the invention, there are four stages. Pre-heating is performed upstream of the third and fourth stages. Upstream of the third stage pre-heating is effected by heat exchange with gas passing from the waste heat boiler associated with the first stage furnace to the first stage condenser, while pre-heating upstream of the fourth stage is effected by heat exchange with gas passing from the waste heat boiler associated with the second stage furnace to the second stage condenser. By pre-heating the hydrogen sulphide containing gas mixture upstream of the third and subsequent stages it becomes possible to maintain a stable flame in these stages and to obtain higher temperatures for the endothermic reaction between hydrogen sulphide and sulphur dioxide than would otherwise be possible. Such higher temperatures enable a greater percentage of the hydrogen sulphide entering the chosen stage to be converted to sulphur vapour.

As an alternative or in addition to pre-heating upstream of the third and subsequent stages, some of the feed gas mixture may be by-passed to and combusted in the third and any subsequent downstream stage.

Another alternative is to burn a fuel in each of the third and subsequent stages in addition to the hydrogen sulphide. Such a fuel may for example be ammonia, hydrogen or a hydrocarbon. The combustion of ammonia in relatively downstream stages is tolerable when no catalytic conversion stages are employed. It is to be noted, however, that if hydrocarbon or other carbon-containing fuel is employed, carbon disulphide will be formed in the combustion reaction, thereby tending to make a small reduction in the overall conversion of hydrogen sulphide to sulphur.

Rather than mix the sour water stripper gas, which typically contains an appreciable proportion of ammonia and water in addition to hydrogen sulphide, with amine gas which is relatively rich in hydrogen sulphide, some of the sour water stripper gas may in yet a further alternative available in a refinery be diverted to the third and any subsequent stage and combusted in each such stage. If none of the alternatives set out in this paragraph is performed, we prefer to pre-heat the gas mixture upstream of the second stage in addition to upstream of the third and subsequent stages.

The invention will now be described by way of example of reference to the accompanying drawings, in which:

Figure 1 is a schematic diagram illustrating the first apparatus for use for performing of the method according to the invention;

Figure 2 is a schematic diagram illustrating a second apparatus for use for performing the method according to the invention; and

Figure 3 is a schematic diagram of a third apparatus for use for performing the method according to the invention;

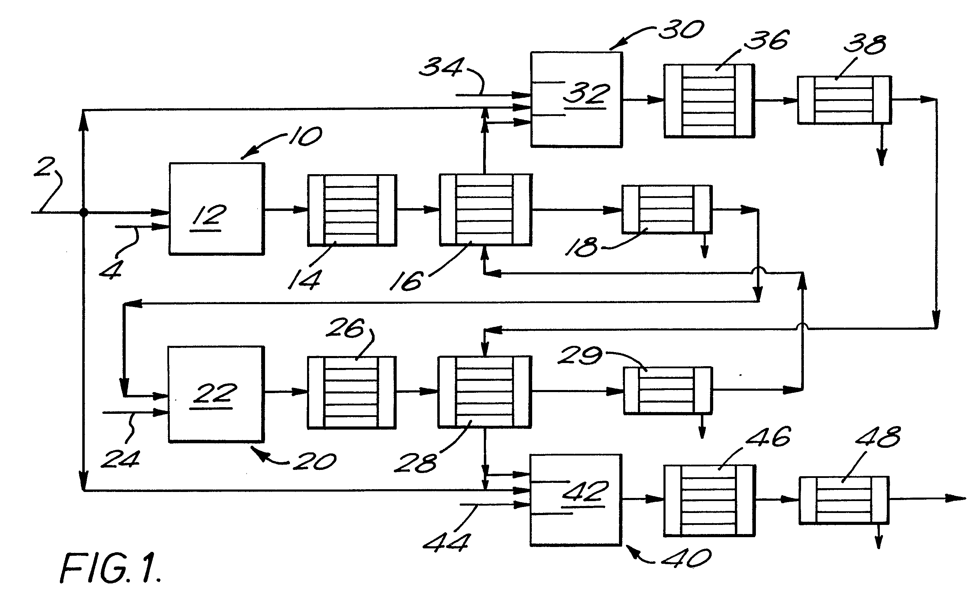

Referring to Figure 1 of the drawings, the illustrated apparatus includes a train of four stages 10, 20, 30, and 40 respectively for recovering sulphur from a gas mixture including hydrogen sulphide.

The apparatus may be used to recover sulphur from streams of hydrogen sulphide containing gas mixture having widely varying compositions, but it is particularly suitable for recovering sulphur from such a stream containing at least 50% by volume of hydrogen sulphide, and particularly a stream containing more than 70% by volume of hydrogen sulphide. In general, the higher the calorific value of the gas stream comprising hydrogen sulphide the easier it becomes to obtain recovery of at least 90% of the sulphur value of the hydrogen sulphide containing gas mixture in not more than four stages of thermal reaction between hydrogen sulphide and sulphur dioxide.

The feed gas mixture is introduced into the apparatus illustrated in Figure 1 through a pipeline 2. The pipeline 2 terminates in an inlet to a burner (not shown) that fires into a furnace 12 performing part of the first stage of the method according to the invention. Typically, not all of the feed gas mixture is supplied to the furnace 12. Instead, less than about 20-30% of the feed gas stream typically is diverted to downstream stages of the method according to the invention.

In order to support combustion in the furnace 12, commercially pure oxygen or oxygen-enriched air is supplied to the burner (not shown) in the furnace 12 via a pipe 4. It is preferred that the source of oxygen is pure. The presence of nitrogen in the oxygen serves only to reduce the total treatment capacity of the apparatus shown in Figure 1. The relative rates of supply of hydrogen sulphide containing gas mixture and oxygen to the furnace 12 are primarily determined by temperature limitations.

These temperature limitations are generally the maximum temperature which the furnace 12 can withstand and the maximum inlet temperature that can be tolerated by downstream heat exchange equipment used to cool the resulting gas mixture from the furnace 12. Subject to these limitations, a maximum flame temperature in the range of 1150-1450°C is typically achieved in the furnace 12. The combustion of hydrogen sulphide proceeds stoichiometrically in accordance with the equation

$$2H_2S + 3O_2 = 2H_2O + 2SO_2$$

Accordingly, the ratios of proportions of hydrogen sulphide and oxygen entering the furnace 12 per unit time may be selected in order to convert a chosen mole fraction of the hydrogen sulphide to sulphur dioxide. Whereas in a conventional Claus process it is necessary to combust about one third of the incoming hydrgen sulphide, there is a greater flexibility in the process according to the invention. However, the rate at which sulphur dioxide is formed by combustion of the hydrogen sulphide is significantly less than one third of the rate at which hydrogen sulphide enters the furnace 12. In one example, about 16-17% of the volume of the hydrogen sulphide entering the furnace 12 may be combusted to sulphur dioxide.

The sulphur dioxide formed by the combustion of hydrogen sulphide undergoes Claus reaction with hydrogen sulphide in accordance with the equation

$$SO_2 + 2H_2S = 2H_2O + 3S$$

to form sulphur vapour and water vapour. As a result of the endothermic nature of the reaction between hydrogen sulphide and sulphur dioxide the temperature of the reacting gases falls, and typically a gas mixture containing sulphur vapour, water vapour and unreacted hydrogen sulphide and sulphur dioxide leaves the furnace 12 at an elevated temperature normally some 50 to 100°C less than the theoretical combustion temperature. The gas mixture is then reduced in temperature in a waste heat boiler 14. As a result of the temperature reduction steam is released in the waste heat boiler 14. Unlike a conventional Claus process, the temperature of the gas mixture not reduced in the waste heat boiler to a level above that suitable for its immediate introduction into a condenser in order to recover sulphur vapour.

Typically, the temperature is reduced in the waste heat boiler 14 to a value in the range 500°C to 700°C. Further temperature reduction is carried out in a gas-to-gas heat exchanger 16 downstream of the waste heat boiler 14. The gas mixture leaves the heat exchanger 16 at a temperature suitable for its admission to a condenser of sulphur vapour of a conventional kind. Sulphur vapour, but not water vapour, is condensed in the condenser 18 and the resulting condensate is separated from the gas mixture and passed to a sulphur seal pit (not shown). The gas mixture leaves the sulphur condenser 18 substantially free of sulphur vapour at a temperature typically in the range of about 125-200°C. This gas mixture then passes to the second stage 20 of the process according to the invention.

In the second stage, a further proportion of the hydrogen sulphide content of the gas mixture is combusted in a burner (not shown) that fires into a furnace 22 using commercially pure oxygen (or less preferably oxygen-enriched air) supplied through inlet 24 to support the combustion. Typically, the furnace 22 is similar to the furnace 12 in the first stage and hydrogen sulphide is combusted at a rate similar to that at which it is burned in the first stage 10 of the process according to the invention. As in the first stage, it is important to avoid creating excessive temperatures in the flame zone of the burner that would damage the furnace itself or cause damage to downstream heat exchangers. Typically, a flame temperature in the range 1150-1450°C is created in the furnace 22.

Reaction between the sulphur dioxide and hydrogen sulphide also takes place in the furnace 22. Since the reaction between hydrogen sulphide and sulphur dioxide is endothermic the temperature at which the gas mixture leaves the furnace 22 is less than the maximum that occurs in the flame zone of the burner in the furnace 22. Thus, the gas leaves the furnace 22 typically at an elevated temperature normally some 50-100°C less than the theoretical combustion temperature. It is then subjected to cooling first to a temperature in the order of 500-700°C by passage through a waste heat boiler 26 in which steam is raised so as to reduce its temperature typically to a value in the range of 500-700°C, and secondly by gas-to-gas heat exchange in a heat exchanger 28. The gas mixture leaves the heat exchanger at 28 at a temperature suitable for condensation of sulphur vapour therefrom. It then enters a condenser 29 in which substantially all the sulphur vapour in the gas mixture is condensed therefrom. The resulting condensate is separated from the gas mixture and passes into a sulphur seal pit (not shown). The gas mixture, substantially free of sulphur vapour, leaves the condenser 29 at a temperature in the order of about 125-200°C and passes to the third stage 30 of the process according to the present invention.

Whereas in the first stage 10 of the process according to the invention the amount of sulphur dioxide that can be formed by combustion of the hydrogen sulphide has a limit placed on it by the maximum temperature that the furnace 12 or the downstream waste heat boiler 14 can withstand over long periods of operation, there is no such limitation on the third stage. Typically, the first two stages of the process according to the invention are effective to convert more than 70% of the incoming hydrogen sulphide to sulphur vapour. Accordingly, the partial pressure of hydrogen sulphide in the gas mixture is less in the third stage than in the first two stages. Moreover, a considerable volume of water vapour is formed by the combustion in Claus reactions in the first two stages and this further decreases the partial pressure of hydrogen sulphide (and of sulphur dioxide) in the third stage. In addition, the water vapour absorbs heat in the third stage. Accordingly, there is a tendency for the temperature created in the third stage to be considerably less than in the first and second stages such that the percentage conversion of hydrogen sulphide entering that stage to sulphur vapour is reduced and such that there is a tendency for the flame temperature to be sufficiently low for the stability of the flame to be threatened. In the apparatus shown in

6

Figure 1, however, these tendencies are effectively counteracted by a combination of two measures. The first of these measures is that the gas leaving the condenser 29 of the second stage 20 is pre-heated. The pre-heating is carried out by heat exchange in the heat exchanger 16 of the first stage. Accordingly, the gas mixture that has passed out of the furnace 12 of the first stage gives up heat, as it is cooled, to the gas intermediate the condenser 29 of the second stage and the third stage furnace 32. It is to be noted that the use of substantially pure oxygen to support combustion in the furnaces 12 and 22 enables the amount of gas such as nitrogen that flows through the apparatus shown in Figure 1 without taking part in the reactions involved to be kept to a minimum. Were air to be used to support combustion in the first two stages, it would be impractical to raise the necessary temperature in the third stage by heat exchange with the gas leaving the first stage.

The second measure used to gain adequate flame temperature in the furnace 32 of the third stage 30 and thereby to keep tht exit temperature of the gases from the furnace 32 acceptably high is to by-pass some of the hydrogen sulphide containing gas mixture entering the apparatus shown in Figure 1 to the third stage. Typically, about 5-10% by volume of the incoming gas mixture containing hydrogen sulphide is so by-passed. This gas is mixed with the pre-heated gas mixture immediately upstream of the furnace 32. If desired, if hydrogen sulphide containing gas mixture is formed by mixing two gas streams of different calorific value, for example sour water stripper gas and amine gas, a portion of the sour water stripper gas is by-passed to the third stage upstream of where it is mixed with the amine gas, this by-passing being performed instead of the by-pass of part of the mixed gas.

The pre-heated hydrogen sulphide containing gas mixture leaving the heat exchanger 16 enters the furnace 32 in two streams. One stream passes to a burner (not shown) that fires into the furnace 32. The burner is also fed with commercially pure oxygen from an inlet 34. Further sulphur dioxide is thus formed by combustion of the hydrogen sulphide. The rate at which oxygen is passed into the furnace 32 is such that sulphur dioxide is formed in the furnace 32 at about one-twentieth to one-sixtieth of the rate at which hydrogen sulphide enters the pipeline 2. Further Claus reaction also takes place in furnace 32 between the residual hydrogen sulphide and sulphur dioxide to form further sulphur vapour and water vapour. The resulting gas mixture leaves the furnace 32 typically at an elevated temperature slightly less than the theoretical flame temperature and is cooled in waste heat boiler 36 to a temperature suitable for its admission to a condenser for removal of sulphur vapour. The gases leave the waste heat boiler 36 and pass into a sulphur condenser 38 in which sulphur vapour is condensed from the gas mixture and is separated therefrom. The resulting sulphur condensate is passed to a sulphur seal pit (not shown) whereas the residual gas, free of sulphur, passes to the fourth stage 40 of the process according to the invention.

The operation of the fourth stage 40 of the process according to the invention is similar to that of the third stage. In particular, the gas leaving the condenser 38 is pre-heated by heat exchange with gas mixture passing through the heat exchanger 28 from the waste heat boiler 26 to the condenser 29. The gas being pre-heated thus provides cooling for the gas passing from the waste heat boiler 26 to the condenser 29. In addition, about 5-10% of the incoming hydrogen sulphide containing gas mixture is by-passed from upstream of the first stage to the fourth stage 40 and enters furnace 42 forming part of the fourth stage 40. These measures help to maintain a stable flame in the fourth stage furnace 42 and enhance the temperature created therein, thus increasing the percentage conversion of hydrogen sulphide to sulphur in the fourth stage 40. The pre-heated gas mixture from the third stage 30 is divided into two streams, and one stream is introduced into the furnace 42 through a burner (not shown) that fires into the furnace 42. Commercially pure oxygen is supplied to the burner through pipe 44 in order to support combustion of the hydrogen sulphide. Typically the rate of supply of oxygen to the fourth stage burner is such that hydrogen sulphide is burned in the furnace 42 at a rate of about one-thirtieth to one-sixtieth of that which it enters the pipeline. In addition to the combustion of hydrogen sulphide, reaction takes place in the furnace 42 but between hydrogen sulphide and sulphur dioxide thus forming further sulphur vapour. Typically, the resulting gas mixture leaves the furnace 42 at an elevated temperature about 50-100 °C less than the theoretical flame temperature in the furnace 42, and is then cooled in waste heat boiler 46 to a temperature suitable for its introduction into a condenser of sulphur vapour. On leaving the waste heat boiler the gas mixture is then introduced into a sulphur condenser 48, and sulphur vapour condensed therefrom. The resulting sulphur condensate is then passed to a sulphur seal pit (not shown) while the residual gas is now sufficiently dilute in hydrogen sulphide (eg containing less than 10% by volume of hydrogen sulphide) to enable it to pass to a conventional tail gas clean up plant that is adapted to purify gas mixtures as such concentrations or to an incinerator. If a tail gas clean up plant is employed it may be of the Scott or Beavons type.

The plant shown in Figure 1 enables typically at last 85% and generally more than 90% of the hydrogen sulphide content of a relatively concentrated hydrogen sulphide containing feed gas to be converted to sulphur vapour and thereby produce a gas mixture which is suitable for incineration or for

7

further treatment in a plant of the aforementioned Scott or Beavons kind. This result is achieved without the use of any catalytic conversion stage upstream of the tail gas clean up plant. The relatively large pressure drops thus associated with the catalytic conversion stages of the conventional Claus process therefore avoided. Moreover, by employing gas in the upstream part of the process to pre-heat gas in a relatively downstream part of the process, and by by-passing a small proportion of the hydrogen sulphide from the first stage to the third and fourth stages, it is possible to limit the number of furnaces employed in the process to four.

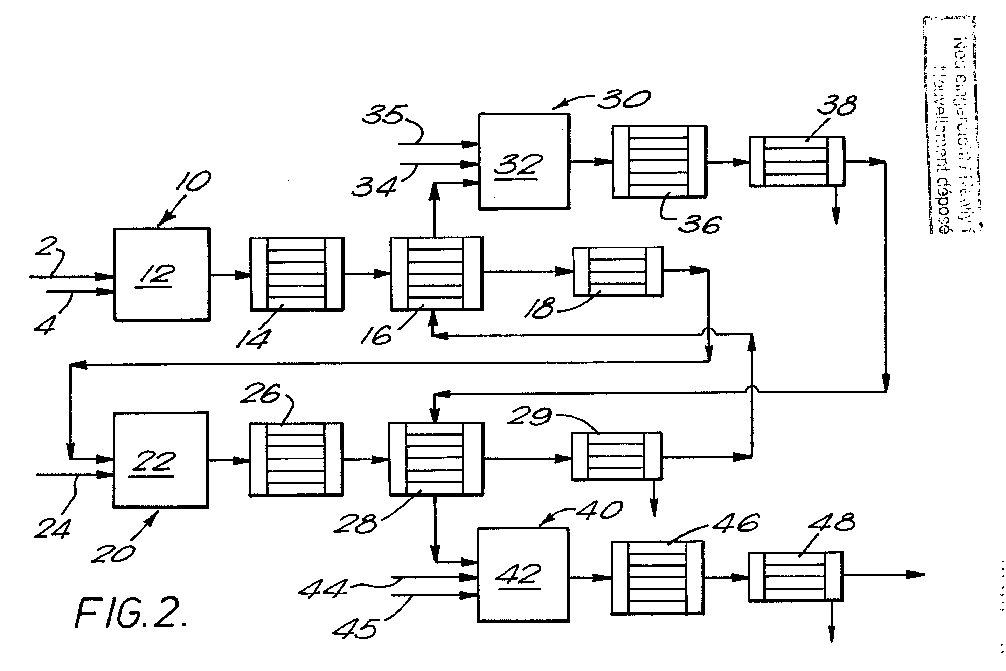

Referring now to Figure 2 of the drawings (in which parts similar to the plant shown in Figure 1 are indicated by the same references that are employed in Figure 1) there is illustrated a plant for recovering sulphur from hydrogen sulphide that operates on similar principles to the plant shown in Figure 1. There are two major differences between the plant shown in Figure 1 and that shown in Figure 2. First, all the incoming feed gas is passed into the first stage reaction furnace 12 and none is by-passed to the third and subsequent stages. Second, in the third and fourth stages a fuel, for example hydrocarbon, although preferably a carbon-free fuel such as ammonia or hydrogen may be used, is burned in the furnaces 32 and 42 to enhance the temperature therein. The fuel may be mixed with the hydrogen sulphide containing gas stream or, as shown, may be kept separate therefrom in both of the third stage furnace 32 and the fourth stage furnace 42 being introduced thereto through pipes 35 and 45 respectively. Where the fuel is burned separately from the hydrogen sulphide in a chosen stage, the respective combustion products are desirably mixed so as to give a uniform flame temperature. In other respects the apparatus shown in Figure 2, and its operation, is the same as that shown in Figure 1.

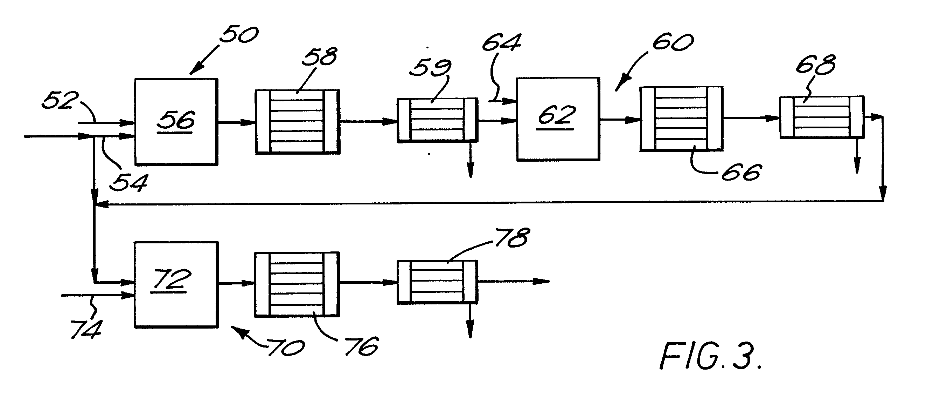

It is not essential in the process according to the invention to pre-heat the hydrogen sulphide containing gas mixture upstream of the third and each subsequent stage. One alternative is to divide the feed gas stream into two approximately equal streams and by-pass one of the streams to the third stage. Such a process is illustrated in Figure 3 of the accompanying drawings. Referring to Figure 3, the illustrated apparatus includes a pipeline 52 for hydrogen sulphide containing gas mixture which communicates with an inlet 54 to a furnace 56 forming part of the first stage 50 of recovery of sulphur from a hydrogen sulphide containing gas mixture. Typically, the inlet 54 communicates with the burner (not shown) that fires into the furnace. An inlet 58 for commercially pure oxygen (or less preferably oxygen-enriched air) also communicates with the burner. The operation of the furnace 56 is similar to that of the furnace 12 shown in Figure 1 described with respect thereto. A gas mixture containing hydrogen sulphide, sulphur dioxide, sulphur vapour and water vapour leaves the furnace 56 at an elevated temperature in the order of $50\text{-}100^\circ$ C less than the theoretical flame temperature and is cooled in a waste heat boiler 58 to a temperature suitable for subsequent condensation of sulphur vapour therefrom. Steam is also produced in the waste heat boiler 58. Sulphur vapour is condensed from the gas mixture in a downstream condenser 59 and the resulting condensate is passed to a sulphur seal pit (not shown). The gas mixture then passes into a second stage 60 of the process.

The second stage 60 includes a furnace 62 for effecting further conversion of hydrogen sulphide to sulphur vapour. The hydrogen sulphide containing gas mixture typically enters the furnace 62 through a burner (not shown) which fires into the furnace. The burner typically also has an inlet 64 for commercially pure oxygen (or less preferably oxygen-enriched air). The operation of the furnace 62 is generally similar to that of the furnace 22 in the second stage of the process illustrated in Figure 1 of the accompanying drawings and described reference thereto. Accordingly, another proportion of the hydrogen sulphide is converted to sulphur vapour in the furnace 62 and the resulting gas mixture comprising hydrogen sulphide, sulphur dioxide, sulphur vapour and water vapour passes out of the furnace 62 at an elevated temperature in the order of $50\text{-}100^\circ$ C less than the theoretical flame temperature in the furnace 62 and flows into a waste heat boiler 66 in which it is cooled to a temperature suitable for subsequent sulphur condensation. Steam is also raised in the waste heat boiler 66. The resulting cooled hydrogen sulphide containing gas mixture then passes into a sulphur condenser 68 and its sulphur content is condensed therefrom and the resulting condensate is passed to a sulphur seal pit (not shown).

The gas mixture leaving the sulphur condenser 68 is then mixed with the other stream of hydrogen sulphide containing gas mixture which is formed by dividing the incoming hydrogen sulphide containing gas mixture in pipeline 52 into two separate streams. The resultant mixture then enters a third stage 70 of sulphur conversion. Particularly when the hydrogen sulphide gas containing mixture entering the plant shown in Figure 3 through the pipeline 52 is relatively concentrated in hydrogen sulphide, say, containing more than 70% by volume of hydrogen sulphide, the division of the gas mixture into two approximately equal streams and the subsequent mixing of one of the streams with the gases passing from the second to the third stage of the process considerably enhances the calorific value of the gas entering the third stage 70 and thus enables a relatively high temperature to be achieved in a furnace 72 forming part of the third

8

stage 70 without the need to employ heat exchangers to pre-heat the gas mixture as in the plant shown in Figure 1 and Figure 2 or the need to introduce a separate fuel gas into the third stage of the process as shown in Figure 2.

The first, second and third stages are preferably operated such that, in total, about one third of the hydrogen sulphide in the feed gas entering the pipeline 52 is burned to form sulphur dioxide.

Less than 25% of the hydrogen sulphide in the feed gas is converted to sulphur in the first stage but by the end of the third stage more than 85% has been converted. The relative amount of hydrogen sulphide burned in the furnace 72 of the third stage 70 and in the other furnaces is chosen accordingly. The hydrogen sulphide containing gas mixture enters the furnace 72 through a burner (not shown) that fires into this furnace. The burner also has an inlet 74 for oxygen (or oxygen-enriched air) which is used to support combustion of the hydrogen sulphide. The relative rates at which the gases are introduced into the furnace 72 are controlled so as to give the desired amount of combustion of hydrogen sulphide. Sulphur dioxide formed as a result of the combustion reacts with residual hydrogen sulphide to yield further sulphur vapour. The resulting gas mixture passes out of the furnace 72 at a temperature in the order of 50-100°C less than the theoretical flame temperature and is cooled to a temperature suitable for sulphur condensation in a waste heat boiler 76, wherein steam is also formed. The resulting cooled gas mixture is then passed into a condenser 78 in which the sulphur vapour is condensed therefrom. The resulting condensate is passed to a sulphur seal pit (not shown). Typically, the gas leaving the condenser 78 has a concentration of hydrogen sulphide less than 20% by volume. It may then be passed through a catalytic treatment stage in which further reaction between the hydrogen sulphide and sulphur dioxide takes place so as to reduce the concentration of hydrogen sulphide to a level at which the gas mixture is suitable for further purification in the kind of tail gas clean up plant described with reference to Figure 1 or for incineration. Accordingly, the process described with respect to Figure 3 is less preferred than the one described with reference to Figures 1 and 2 but is still advantageous over conventional Claus processes in which more than one catalytic reaction stage is employed.

An example of the operation of the process according to the invention is given below. The example is based on a computer simulation of the operation of an apparatus shown in Figure 3 with the following modifications. First, all the feed gas enters the first stage 50 of conversion, none being diverted to the third stage 20. Secondly, the gas leaving the condenser 68 is preheated to 500°C, typically in a heat exchanger (not shown) intermediate the waste heat boiler 66 and the condenser 68. The computer programme employed in the simulation of the process predicts that the extent of reaction in each stage is limited by kinetic factors, that is to say equilibrium is not reached.

|  | Feed Gas | | Stage 50 (At inlet to Condenser 59) | | Stage 60 (At inlet to Condenser 68) | | Stage 70 (At inlet to Condenser 78) | |
|---|---|---|---|---|---|---|---|---|
|  | mol | mol % | mol | mol % | mol | mol % | mol | mol % |
| $H_2$ | - | - | 4.99 | 4.96 | 2.50 | 2.48 | 1.00 | 0.972 |
| CO | - | - | 0.77 | 0.76 | 0.47 | 0.467 | 0.26 | 0.257 |
| $CO_2$ | 5.0 | 5.0 | 3.46 | 3.43 | 4.40 | 4.373 | 4.93 | 4.793 |
| $H_2S$ | 90.0 | 90.0 | 43.52 | 43.21 | 17.53 | 17.404 | 4.11 | 3.995 |
| COS | - | - | 0.77 | 0.76 | 0.47 | 0.47 | 0.15 | 0.15 |
| $SO_2$ | - | - | Trace | - | Trace | - | 2.13 | 2.073 |
| $CS_2$ | - | - | 0.36 | 0.36 | 0.00 | 0.00 | 0.00 | 0.00 |
| $H_2O$ | 4.638 | 4.638 | 46.85 | 46.52 | 75.34 | 74.803 | 90.25 | 87.76 |
| HC as $C_1$ | 0.362 | 0.362 | - | - | - | - | - | - |
| S as Sx | - | - | 22.49 | - | 13.50 | - | 5.80 | - |
| Conversion % | - | | 50.00 | | 80.00 | | 92.90 | |
| Temp °C | 43.3 | | 1303.3 | | 1225.2 | | 1186.0 | |
| Moles $O_2$ | 30 | | 6 | | 24 | | - | |
| For Stage 2 inlet gas temp 190.6 °C | | | | | | | | |
| For Stage 3 inlet gas preheated to 500 °C | | | | | | | | |

## Claims

1. A method of recovering sulphur from a feed gas stream comprising hydrogen sulphide, in which the feed gas is passed through a train of at least three stages in each of which the portion of the hydrogen sulphide is burned using oxygen to support combustion, some of the sulphur dioxide reacts at a temperature of greater than 800 °C with residual hydrogen sulphide to form sulphur vapour and water vapour, and the sulphur vapour is separated from the resulting gas mixture, wherein at least 80 mole per cent of the sulphur content of the hydrogen sulphide in the feed gas is converted to sulphur vapour at temperatures greater than 800 °C, but up to 80 mole per cent of the sulphur content of the hydrogen sulphide in the feed gas remains unreacted in the first stage.

2. A method as claimed in claim 1, in which more than 85 mole per cent of the sulphur content of the hydrogen sulphide in the feed gas is converted to sulphur vapour at temperatures greater than 800 °C.

3. A method as claimed in claim 1 or claim 2, in which the sulphur vapour is separated from the said resulting gas mixture by cooling the resulting gas mixture and condensing the sulphur vapour from the cooled gas mixture.

4. A method as claimed in claim 3, in which the hydrogen sulphide containing gas mixture passing to each of the third in sequence of the said train of stages and any further downstream stage is pre-heated.

5. A method as claimed in claim 4, in which the gas mixture is pre-heated to a temperature in the range of 400-700 °C.

6. A method as claimed in claim 5, in which the pre-heating of the hydrogen sulphide containing gas mixture upstream of a chosen stage is effected in a heat exchanger used in another stage to effect cooling of the hydrogen sulphide containing gas mixture.

7. A method as claimed in any one of the preceding claims, in which some of the feed gas mixture is by-passed to and combusted in each of the third and any subsequent downstream stage.

8. A method as claimed in any one of the preceding claims, in which a fuel is burned in each of the third and any subsequent downstream stage in addition to the hydrogen sulphide.

9. A method as claimed in claim 4, in which the hydrogen sulphide containing gas mixture is pre-heated upstream of the second stage in addition to upstream of the third and subsequent stages.

10. A method as claimed in any one of the preceding claims, in which less than 25 mole per cent of the sulphur content of the hydrogen sulphide in the feed gas is converted to sulphur vapour in the first stage.

11. Apparatus for recovering sulphur from a feed gas stream comprising hydrogen sulphide comprising a train of at least three furnaces each having a combustion zone in which in use a portion of the incoming hydrogen sulphide is burned in the presence of oxygen to form sulphur dioxide and water vapour, a thermal reaction zone in which some of the sulphur dioxide is able to react with residual hydrogen sulphide at a temperature greater than 800°C to form sulphur vapour and water vapour and means associated therewith for separating the sulphur vapour from the resulting gas mixture, wherein each combustion zone has its own inlet communicating with a source of oxygen, whereby at least 80 mole per cent of the sulphur content of the hydrogen sulphide in the feed gas is able to be converted to sulphur at temperatures greater than 800°C with up to 80 mole per cent of the sulphur content of the hydrogen sulphide in the feed gas remaining unreacted in the most upstream furnace.

12. Apparatus as claimed in claim 11, in which said separating means comprises means for cooling the gas mixture leaving the furnace and a condenser in which further cooling is able to be performed so as to condense the sulphur vapour.

13. Apparatus as claimed in claim 12, including means for pre-heating the hydrogen sulphide containing gas mixture upstream of each of the third and any subsequent stage.

FIG.1.

Nachgereicht / Newly filed
Nouvellement déposé

EP 0 328 820 A2

FIG.2.

Nachgereicht / Newly 1
Nouvellement déposé

EP 0 328 820 A2

FIG.3.

EP 0 328 820 A2